(19) Europäisches Patentamt
European Patent Office
Office européen des brevets

(11) EP 0 649 596 B1

# (12) EUROPEAN PATENT SPECIFICATION

(45) Date of publication and mention of the grant of the patent:
**30.09.1998 Bulletin 1998/40**

(51) Int. Cl.$^6$: **A01N 43/653**

(21) Application number: **93202963.0**

(22) Date of filing: **22.10.1993**

## (54) Herbicidal triazolinones

Herbizide Triazolinone

Triazolinones herbicides

(84) Designated Contracting States:
**AT BE CH DE DK ES FR GB GR IE IT LI LU MC NL PT SE**

(43) Date of publication of application:
**26.04.1995 Bulletin 1995/17**

(73) Proprietor: **FMC CORPORATION**
**Philadelphia, PA 19103 (US)**

(72) Inventors:
- **Poss, Kathleen Megan**
  **Lawrenceville, New Jersey 08648 (US)**
- **Hotzman, Frederick William**
  **Morrisville, Pennsylvania 19067 (US)**

(74) Representative:
**Hamilton, Raymond**
**FMC Corporation (UK) Limited**
**Process Additives Division**
**Tenax Road**
**Trafford Park**
**Manchester M17 1WT (GB)**

(56) References cited:
**DE-A- 3 238 590**
**US-A- 4 404 019**
**US-A- 5 125 958**

- **MEDEDELINGEN VAN DE FACULTEIT LANDBOUWWETENSCHAPEN, RIJKSUNIVERSITEIT GENT vol. 51, no. 2A , 1986 , GENT pages 409 - 420 M SNEL ET AL. 'Fluroxpyr, a flexible herbicide for control of GALIUM APARINE in small grain cereals, an analysis of trial data collected in Germany during the 1984 and 1985 growing seasons'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 649 596 B1

## Description

This invention relates to a method for controlling the broad-leaf weed galium aparine in growing food crops, particularly cereal crops, by application of herbicidal 1-aryl-4,5-dihydro-1,2,4-triazol-5(1H)-ones to the locus where control is desired.

The selective activity of certain 1-aryl-4,5-dihydro-1,2,4-triazol-5(1H)-ones against the weeds of commercial crops has been described in the patent literature. See, for example, U.S. Patent 5,125,958.

DE3238590 describes certain triazolines which are unsubstituted in the 1 position and have to be substituted by alkyl, alkaryl or aryl groups in the 3 and 4 positions which are useful as selective herbicides for controlling galium aparine. This patent teaches that the triazolines useful for this purpose should not be substituted in position 1.

USP4404019 discloses certain triazolines useful as selective herbicides and states they are useful in controlling numerous weeds including galium aparine. These triazolines have an alkyl subsistent in position 4 and a phenyl substituent in position 1 which is unsubsituted or alkoxy substituted at position 5 on the phenyl ring. The use of these compounds to control galium asparine is not specifically described.

Mededelingen van de faculteit landbouwwetenschapen, rijksuniversiteit Gent 51 (2A) p409-420 describes fluroxypr a structurally unrelated herbicide as being useful in the control of galium asparine.

In accordance with the present invention, it has now been found that these aforementioned triazolinones are highly effective in controlling the destructive weed galium (*Galium aparine*), commonly known as "catchweed bedstraw", in growing cereal crops such as wheat, barley, oats, rice and rye. These triazolinones are effective in that (1) they control or suppress galium rapidly for long periods of time, (2) they are selective for this weed without harming the commercial cereal crop, (3) they may be used in low-level amounts and degrade rapidly in the soil, and (4) they may be used by either pre-emergent or post-emergent application in a variety of different formulations.

The triazolinones employed in the methods of this invention may be defined as ones generally known in the prior art wherein the 5-position of the benzene ring carries a substituent (Q) as described in the following structural formula :

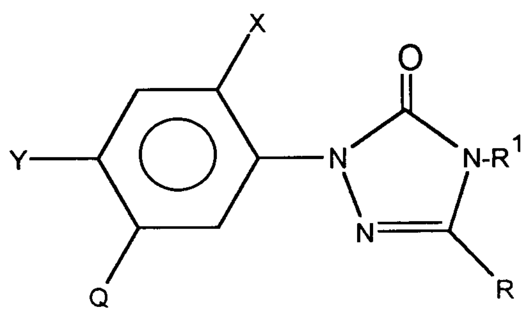

(I)

wherein

R is halogen, or lower alkyl;
$R^1$ is haloalkyl;
X is hydrogen, halogen, alkyl, haloalkyl, alkoxy, or nitro;
Y is hydrogen, halogen, alkyl, alkoxy, haloalkyl, halo lower alkylsulfinyl, or halo lower alkoxy;
Q is $-CH(R^2)C(R^3)(R^4)Q'$;
$R^2$ is H or halogen;
$R^3$ is halogen;
$R^4$ is H or lower alkyl;
Q' is COOH, COOZ, $COOR^5$, $CON(R^6)(R^7)$, CN, CHO or $C(O)R^5$;
Z is a salt-forming group;
$R^5$ is alkyl, alkoxycarbonylalkyl, cycloalkyl, aryl, haloaryl, haloalkylaryl, or aralkyl, preferably benzyl;
each of $R^6$ and $R^7$ is, independently, hydrogen or a radical which is alkyl, cycloalkyl, alkenyl, alkynyl, alkoxy, phenyl, benzyl or $SO_2R^6$ or is one of said radicals substituted by halogen, alkyl or cyano.

Thus, more particularly, in the foregoing formula, R, $R^1$, Q and Q' may be as defined above, and $R^2$ and $R^3$ may each, independently, be hydrogen or halogen (such as chlorine, bromine, or fluorine), while $R^4$ may be H or lower alkyl.

Z may be a salt-forming group, such as one which forms a base addition salt with a carboxylic acid, e.g., a sodium,

potassium, calcium, ammonium, magnesium, or mono-, di- or tri($C_1$ to $C_4$ alkyl)ammonium or sulfonium or sulfoxonium ion;

$R^5$ may be alkyl, alkoxycarbonylalkyl, cycloalkyl (e.g., of 3 to 6 carbon atoms such as cyclopropyl or cyclopentyl), aralkyl such as benzyl or substituted benzyl (e.g., chlorobenzyl, alkylbenzyl, or haloalkylbenzyl, such as 4-chlorobenzyl or 4-trifluoromethylbenzyl); and

$R^6$ and $R^7$ may each, independently, be H, OH, alkyl, cycloalkyl, alkenyl, alkynyl (e.g., propynyl), alkoxy, phenyl, benzyl, or $SO_2R^6$ (in which $R^6$ is other than H), or any of the foregoing carrying additional substituents; such additional substituents may be halogen (e.g. in haloalkyl such as chloroethyl, halophenyl such as chlorophenyl, halobenzyl such as chlorobenzyl), alkyl, or cyano.

X may be hydrogen, halogen such as chlorine, bromine, or fluorine (preferably fluorine), alkyl such as lower alkyl (e.g., methyl), haloalkyl such as halo lower alkyl (e.g., $CF_3$, $CH_2F$ or $CHF_2$), alkoxy such as lower alkoxy (e.g. methoxy), or nitro; and

Y may be hydrogen; halogen such as chlorine, bromine, or fluorine (preferably bromine or chlorine); alkyl such as lower alkyl (e.g., methyl); alkoxy such as lower alkoxy (e.g. methoxy); haloalkyl such as halo lower alkyl (e.g., fluoroalkyl); halo lower alkylsulfinyl (e.g., $-SOCF_3$); or halo lower alkoxy (e.g., $-OCHF_2$). (Presently preferred X, and Y substituents are: 2-F, 4-Cl; 2-F, 4-Br; 2,4-diCl; 2-Br, 4-Cl; and 2-F, 4-$CF_3$).

In a preferred embodiment of this invention, there are employed the triazolinones of the formula

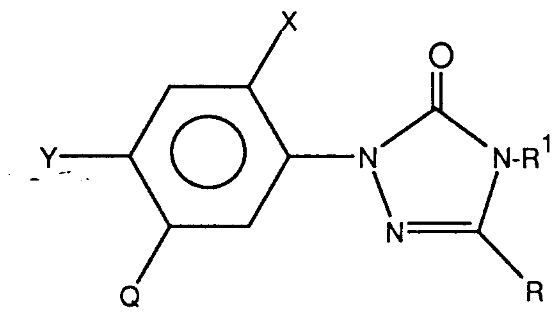

(II)

wherein

R is lower alkyl, preferably methyl;

$R^1$ is haloalkyl, preferably difluoromethyl;

X and Y are independently halogen, preferably 2,4-dichloro- or 2-chloro-4-fluoro-; and

Q is 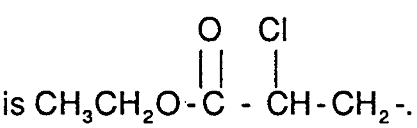

Most preferred is the compound having the formula

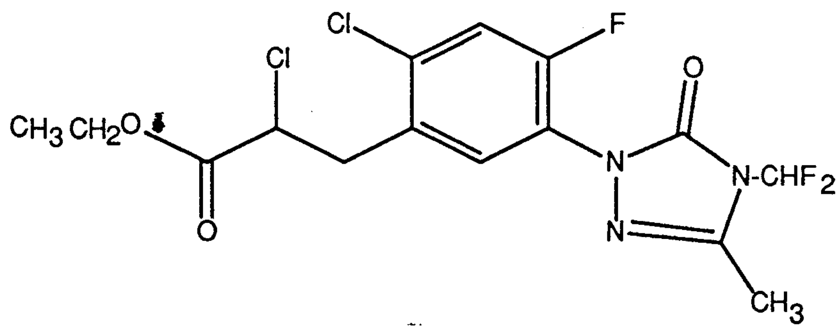

(III)

i.e., ethyl 2-chloro-3-[2-chloro-4-fluoro-5-(4-difluoromethyl-4,5-dihydro-3-methyl-5-oxo-1H-1,2,4-triazol-1-yl)phenyl]propionate.

In each aspect of the invention it is preferred that any alkyl, alkenyl, alkynyl or alkylene moiety (such as the hydrocarbon moiety of an alkoxy or haloalkoxy group) have less than 6 carbon atoms, e.g., 1 to 3 or 4 carbon atoms, and that any cycloalkyl moiety have 3 to 7 ring carbon atoms, preferably 3-6 carbon atoms.

Any acidic compound of this invention, including sulfonamides in which $NR^6R^7$ is $NHSO_2R^6$, may be converted to the corresponding base addition salt, such as a salt in which the salt-forming cation is Z as described above.

Method of Preparation

The present compounds may be prepared by methods described in the literature, in the following examples, or by methods analogous and similar thereto and within the skill of the art.

In Step A of Examples 1 and 3 below an amino compound of the formula

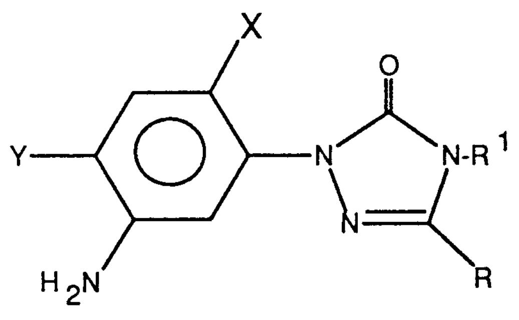

(IV)

(such as the compound shown in Example 1 of International patent publication WO 87/03782, published July 2, 1987) is reacted (according to the Meerwein arylation reaction or a modification thereof) with an olefinic compound having the formula $CHR^2$=$CR^4Q'$ to form a compound of Formula I above in which Q is -$CH(R^2)C(R^3)(R^4)Q'$ and in which $R^3$ is halogen. In this type of reaction the amino compound is converted to a diazonium salt which then reacts with the olefinic compound through a radical mechanism. The Meerwein arylation reaction is discussed in an article by Doyle et al in J. Org. Chem., 42, 2431 (1977) which also describes a modification of that reaction in which an alkyl nitrite and a copper (II) halide are employed. Step A of Examples 1 and 3 employs the Doyle et al modification. Instead one may employ the unmodified reaction, in which the arenediazonium halide is initially prepared in an aqueous halogen acid solution and then mixed with the olefinic compound in the presence of an appropriate solvent (e.g., acetonitrile) followed by the copper salt, such as copper (I) chloride.

The product made by the reactions described above, i.e., a compound of Formula I in which Q is -$CH(R^2)C(R^3)(R^4)Q'$ and in which $R^3$ is halogen, may be treated to form other compounds of this invention. Dehydrohalogenation of that compound (e.g., with sodium hydride or other suitable base), when $R^2$ is H, yields a compound in which Q is -$CH$=$C(R^4)Q'$ (as in Example 1B). That compound may be hydrogenated or halogenated to form a compound in which Q is -$CH(R^2)C(R^3)(R^4)Q'$, and $R^2$ and $R^3$ are H (from hydrogenation, as in Example 1C) or $R^2$ and $R^3$ are halogen (from halogenation as in Example 2). When Q' is -$CO_2H$ (as produced in Example 3A), acidic compound of Formula I may be (as in Examples 4 and 5) converted to the corresponding amide, as by first treating with a reagent

such as thionyl chloride to form the acid halide (wherein Q' is, for example, -COCl) and then reacting with ammonia or an amine. Alternative methods of amide formation, involving carbodiimide-mediated coupling, are illustrated in Examples 3B, 6, and 7. In Examples 3B and 6, the amide is formed from the carboxylic acid and the amine, in the presence of dicyclohexylcarbodiimide, 1-hydroxybenzotriazole and a base such as a tertiary amine, e.g. N,N-diisopropylethylamine or triethylamine, in a solvent such as tetrahydrofuran. In Example 7 the amide is formed from the carboxylic acid and a sulfonamide in the presence of 1,1'-carbonyldiimidazole and a strong base such as 1,8-diazabicyclo [5.4.0]undec-7-ene in a solvent.

Instead of starting with an amino compound (e.g., Formula IV) one may start with an otherwise identical compound having a CHO group in place of the $NH_2$ group and react it with a Wittig reagent (which may be a standard type of Wittig reagent or a modified type such as a Wadsworth-Emmons reagent). Thus, the reagent may be an alkylidene phosphorane whose alkylidene group has the formula $=C(R^4)Q'$ such as $(C_6H_5)_3P=CHCO_2R_5$ or it may be a phosphonate ylide comprising a phosphonate diester in which the group directly attached to the P atom has the formula $-CH(R^4)Q'$ such as $(C_2H_5O)_2P(O)CH_2CO_2R^5$, used together with, e.g., NaH in known manner. $R^5$ is preferably lower alkyl such as methyl or ethyl. The compound where Q is $-CH=C(R^4)Q'$ may be hydrogenated to produce a compound of Formula I in which $R^2$ and $R^3$ are each hydrogen, or it may be halogenated (e.g., with chlorine) to form a compound of Formula I in which $R^2$ and $R^3$ are each halogen. The latter compound may in turn be dehydrohalogenated to form a compound where Q is $-CH=C(R^4)Q'$ in which $R^4$ is halogen, and then hydrogenated to form a compound of Formula I in which $R^4$ is halogen and $R^3$ and $R^2$ are H.

An illustration of the production of a compound having a CHO group in place of the $NH_2$ group of Formula IV is given in Example 8 below.

Instead of starting with a compound containing the triazolinone ring and adding thereto the Q substituent, one may start with a compound of the formula

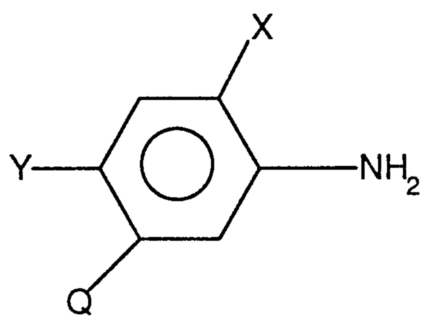

(V)

and then form the triazolinone ring. Compounds of Formula V are shown, for instance, in published European patent applications 300387 and 300398. The $NH_2$ group may be converted to a triazolinone ring in known manner. For instance it may be converted to an $NHNH_2$ (i.e., hydrazine) group in the conventional fashion, by diazotization followed by reduction with sodium sulfite, and the hydrazine group may be converted to a triazolinone ring. Examples of processes for doing that are given, for instance, in U.S. Patent 4,818,275, at column 3, line 49 to column 5, line 8 of that patent; another process for converting the hydrazine group to a triazolinone ring is shown in published Japanese patent applications 60-136572 and 60-136573, published July 20, 1985.

When X and Y are substituents other than H, such substituents may be introduced at various stages of the process. In Examples 1 to 8 below, such substituents are introduced prior to the formation of a compound containing the Q substituent. One or both of these substituents may be introduced after the introduction of the Q substituent; for instance, a chlorine substituent on the benzene ring may be introduced during one of the halogenation steps which modify the Q substituent, as described above.

Certain of the 1-aryl-4,5-dihydro-1,2,4,-triazol-5(1H)-ones of the present invention contain an asymmetric carbon atom; the invention thus includes individual stereoisomers as well as racemic and non-racemic mixtures of enantiomers of the instant compounds. For example, ethyl 2-chloro-3-[2-chloro-4-fluoro-5-(4-difluoromethyl-4,5-dihydro-3-methyl-5-oxo-1H-1,2,4-triazol-1-yl)phenyl]propionate ("Compound P") is composed of a 2S and a 2R isomer. The 2S and 2R isomers of Compound P were separated by High Pressure Liquid Chromatography (HPLC), a method known to one skilled in the art, using a DIACEL CHIRALCEL OD column (distributed by Diacel Chemical Industries Ltd., Exton, Pa.), 4.6 mm IDX250 mm, packed with silica gel of 10 μm in particle size. Elution was accomplished with 1.5% ethanol in hexane at a flow rate of 1 mL/minute.

The invention is illustrated further in the following Examples. In this application, all parts are by weight and all temperatures are in °C unless otherwise indicated.

EXAMPLE 1

METHYL 3-[2,4-DICHLORO-5-(4-DIFLUOROMETHYL-4,5-DIHYDRO 3-METHYL-5-OXO-1H-1,2,4-TRIAZOL-1-YL)PHENYL]PROPIONATE

Step A Methyl 2-Chloro-3-[2,4-dichloro-5-(4-difluoromethyl-4,5-dihydro-3-methyl-5-oxo-1H-1,2,4-triazol-1-yl)phenyl]propionate

To a cold (0°C), stirred mixture of 28.7 g (0.333 mole) of methyl acrylate, 2.51 g (0.0244 mole) of tert-butyl nitrite, and 2.6 g (0.019 mole) of copper (II) chloride in 50 mL of acetonitrile was added dropwise a solution of 5.0 g (0.016 mole) of 1-(5-amino-2,4-dichlorophenyl)-4-difluoromethyl-4,5-dihydro-3-methyl-1,2,4-triazol-5(1H)-one in 15 mL of acetonitrile. After complete addition the reaction mixture was allowed to warm to room temperature and was stirred for approximately 18 hours. The reaction mixture was diluted with 15 mL of 2N hydrochloric acid solution. The mixture was extracted with four portions of diethyl ether. The combined extracts were dried over anhydrous magnesium sulfate, filtered, and the filtrate evaporated under reduced pressure to give an oil. The oil was purified by column chromatography on silica gel, eluting with n-heptane:ethyl acetate (4:1) to give 5.0 g of methyl 2-chloro-3-[2,4-dichloro-5-(4-difluoromethyl-4,5-dihydro-3-methyl-5-oxo-1H-1,2,4-triazol-1-yl)phenyl]propionate as an oil, Compound 3 of Table 1.

Step B Methyl 3-[2,4-dichloro-5-(4-difluoromethyl-4,5-dihydro-3-methyl-5-oxo-1H-1,2,4-triazol-1-yl)phenyl]-2-propenoate

To a stirred, cold (0°C) solution of 4.16 g (0.0100 mole) of methyl 2-chloro-3-[2,4-dichloro-5-(4-difluoromethyl-4,5-dihydro-3-methyl-5-oxo-1H-1,2,4-triazol-1-yl)phenyl]propionate in 15 mL of N,N-dimethylformamide was added portionwise 0.29 g (0.012 mole) of sodium hydride. After complete addition the reaction mixture was allowed to warm to room temperature and was stirred for 30 minutes. The reaction mixture was heated at 60°C for six hours, then was stirred at room temperature for approximately 18 hours. The reaction mixture was poured into ice water, and the resultant aqueous mixture was extracted with four portions of diethyl ether. The extracts were combined and washed successively with water and an aqueous, saturated sodium chloride solution. The washed organic phase was dried over anhydrous magnesium sulfate and was filtered. The filtrate was evaporated under reduced pressure to give a white foam. The foam was purified by column chromatography on silica gel, eluting with n-heptane:ethyl acetate (4:1), to give 1.63 g of methyl 3-[2,4-dichloro-5-(4-difluoromethyl-4,5-dihydro-3-methyl-5-oxo-1H-1,2,4-triazol-1-yl)phenyl]-2-propenoate as a solid, m.p. 148-151 °C.

Step C Methyl 3-[2,4-dichloro-5-(4-difluoromethyl-4,5-dihydro-3-methyl-5-oxo-1H-1,2,4-triazol-1-yl)phenyl]propionate

Hydrogenation of 0.59 g (0.0016 mole) of methyl 3-[2,4-dichloro-5-(4-difluoromethyl-4,5-dihydro-3-methyl-5-oxo-1H-1,2,4-triazol-1-yl)phenyl]-2-propenoate (Compound 39) over approximately 0.2 g (0.0009 mole) of platinum (IV) oxide in approximately 15 mL of ethyl acetate gave 0.59 g of methyl 3-[2,4-dichloro-5-(4-difluoromethyl-4,5-dihydro-3-methyl-5-oxo-1H-1,2,4-triazol-1-yl)phenyl]propionate as a clear oil, which crystallized upon standing. The crystals were triturated with petroleum ether and recovered by filtration, m.p. 70-73°C, Compound 1 of Table 1.

EXAMPLE 2

METHYL 2,3-DIBROMO-3-[2,4-DICHLORO-5-(4-DIFLUOROMETHYL-4,5-DIHYDRO-3-METHYL-5-OXO-1H-1,2,4-TRIAZOL-1-YL)PHENYL]PROPIONATE

In a manner similar to that of Abbott and Althoresen, Org. Syn., Coll. Vol. 2, pg 270, 0.24 g (0.00063 mole) of methyl 3-[2,4-dichloro-5-(4-difluoromethyl-4,5-dihydro-3-methyl-5-oxo-1H-1,2,4-triazol-1-yl)phenyl]-2-propenoate (Compound 39) was treated with six drops of bromine in 15 mL of carbon tetrachloride to give 0.40 g of methyl 2,3-dibromo-3-[2,4-dichloro-5-(4-difluoromethyl-4,5-dihydro-3-methyl-5-oxo-1H-1,2,4-triazol-1-yl)phenyl]propionate as a solid, Compound 10 of Table 1.

The nmr spectrum was consistent with the proposed structure.

EXAMPLE 3

N-CYCLOPROPYL-2-CHLORO-3-[2,4-DICHLORO-5-(4-DIFLUOROMETHYL-4,5-DIHYDRO-3-METHYL-5-OXO-1H-1,2,4-TRIAZOL-1-YL)PHENYL]PROPIONAMIDE

Step A 2-Chloro-3-[2,4-dichloro-5-(4-difluoromethyl-4,5-dihydro-3-methyl-5-oxo-1H-1,2,4-triazol-1-yl)phenyl]propionic acid

To a stirred mixture of 26.3 g (0.366 mole) of acrylic acid, 2.83 g (0.275 mole) of tert-butyl nitrite, and 2.94 g (0.0220 mole) of copper (II) chloride in 75 mL of acetonitrile was added slowly 5.65 g (0.0183 mole) of 1-(5-amino-2,4-dichlorophenyl)-4-difluoromethyl-4,5-dihydro-3-methyl-1,2,4-triazol-5(1H)-one. The reaction mixture was stirred at room temperature for three hours. The reaction mixture was poured into 2N hydrochloric acid solution, and the whole was extracted with diethyl ether. The organic phase was dried over anhydrous magnesium sulfate, filtered, and the filtrate evaporated under reduced pressure to give a yellow solid. The solid was triturated with water and was filtered. The filter cake was dried to give 5.9 g of 2-chloro-3-[2,4-dichloro-5-(4-difluoromethyl-4,5-dihydro-3-methyl-5-oxo-1H-1,2,4-triazol-2-yl)phenyl]propionic acid, Compound 2 of Table 1.

The nmr spectrum was consistent with the proposed structure. A similarly prepared sample of Compound 2 had a melting point of 138-141°C.

Step B N-Cyclopropyl-2-chloro-3-[2,4-dichloro-5-(4-difluoromethyl-4,5-dihydro-3-methyl-5-oxo-1H-1,2,4-triazol-1-yl)phenyl]propionamide

A stirred solution of 0.50 g (0.0013 mole) of 2-chloro-3-[2,4-dichloro-5-(4-difluoromethyl-4,5-dihydro-3-methyl-5-oxo-1H-1,2,4-triazol-1-yl)phenyl]propionic acid (Compound 2), 0.071 g (0.0013 mole) of cyclopropylamine, 0.17 g (0.0013 mole) of 1-hydroxybenzotriazole hydrate, and 0.18 g (0.0014 mole) of N,N-diisopropylethylamine in approximately 15 mL of tetrahydrofuran was cooled to 0°C. To this cold mixture was added 0.26 g (0.0013 mole) of 1,3-dicyclohexylcarbodiimide. After complete addition, the reaction mixture was allowed to warm to room temperature and was stirred for approximately 18 hours. The reaction mixture was filtered. The filtrate was diluted with carbon tetrachloride and was washed in succession with a 1 N hydrochloric acid solution, an aqueous 10% sodium hydroxide solution, water, and an aqueous saturated sodium chloride solution. The organic phase was dried over anhydrous magnesium sulfate, filtered, and the filtrate was evaporated under reduced pressure to give 0.43 g of N-cyclopropyl-2-chloro-3-[2,4-dichloro-5-(4-difluoromethyl-4,5-dihydro-3-methyl-5-oxo-1H-1,2,4-triazol-1-yl)phenyl]propionamide as a solid, m.p. 139-143°C.

The nmr and ir spectra were consistent with the proposed structure.

EXAMPLE 4

N-METHYL-N-METHOXY-2-CHLORO-3-[2,4-DICHLORO-5-(4-DIFLUOROMETHYL-4,5-DIHYDRO-3-METHYL-5-OXO-1H-1,2,4-TRIAZOL-1-YL)PHENYL]PROPIONAMIDE

A mixture of 0.50 g (0.0013 mole) of 2-chloro-3-[2,4-dichloro-5-(4-difluoromethyl-4,5-dihydro-3-methyl-5-oxo-1H-1,2,4-triazol-1-yl)phenyl]propionic acid (Compound 2) and 5 mL of thionyl chloride was stirred at reflux for three hours. The mixture was cooled, and excess thionyl chloride was removed by distillation under reduced pressure leaving a residue. The residue was added to a cold solution of 0.13 g (0.0014 mole) of N,O-dimethylhydroxylamine hydrochloride and 0.11 g (0.0014 mole) of pyridine in 20 mL of tetrahydrofuran. The resultant mixture was stirred at room temperature for approximately 18 hours. The reaction mixture was diluted with diethyl ether and was washed in succession with a 1N hydrochloric acid solution, an aqueous 10% sodium hydroxide solution, water, and an aqueous saturated sodium chloride solution. The washed organic phase was dried over anhydrous magnesium sulfate and was filtered. The filtrate was evaporated under reduced pressure to give 0.37 g of N-methyl-N-methoxy-2-chloro-3-[2,4-dichloro-5-(4-difluoromethyl-4,5-dihydro-3-methyl-5-oxo-1H-1,2,4-triazol-1-yl)phenyl]propionamide as an oil. The nmr and ir spectra were consistent with the proposed structure.

EXAMPLE 5

N-METHYLSULFONYL-2-CHLORO-3-[2,4-DICHLORO-5-(4-DIFLUOROMETHYL-4,5-DIHYDRO-3-METHYL-5-OXO-1H-1,2,4-TRIAZOL-1-YL)PHENYL]PROPIONAMIDE

In a manner similar to Example 4, the reaction of 0.50 g (0.0013 mole) of 2-chloro-3-[2,4-dichloro-5-(4-difluoromethyl-4,5-dihydro-3-methyl-5-oxo-1H-1,2,4-triazol-1-yl)phenyl]propionic acid (Compound 2) with 5 mL of thionyl chloride

produced a residue. To this residue was added 0.50 g (0.0052 mole) of methanesulfonamide. The mixture was stirred and heated at 120°C for two hours. The mixture was cooled, diluted with methylene chloride, and a resultant precipitate was removed by filtration. The filtrate was washed with water. The organic phase was dried over anhydrous magnesium sulfate, filtered, and the filtrate evaporated under reduced pressure to give 0.21 g of N-methylsulfonyl-2-chloro-3-[2,4-dichloro-5-(4-difluoromethyl-4,5-dihydro-3-methyl-5-oxo-1H-1,2,4-triazol-1-yl)phenyl]propionamide as a foam.

The nmr and ir spectra were consistent with the proposed structure.

EXAMPLE 6

2-CHLORO-3-[2,4-DICHLORO-5-(4-DIFLUOROMETHYL)-4,5-DIHYDRO-3-METHYL-5-OXO-1H-1,2,4-TRIAZOL-1-YL)PHENYL]-N-(4-CHLOROPHENYL)PROPIONAMIDE

A stirred solution of 0.50 g (0.0013 mole) of 2-chloro-3-[2,4-dichloro-5-(4-difluoromethyl-4,5-dihydro-3-methyl-5-oxo-1H-1,2,4-triazol-1-yl)phenyl]propionic acid (Compound 2), 0.16 g (0.0013 mole) of 4-chloroaniline, 0.17 g (0.0013 mole) of 1-hydroxybenzotriazole hydrate, and 0.18 g (0.0014 mole) of N,N-diisopropylethylamine in approximately 15 mL of tetrahydrofuran was cooled to 0°C. To this cold reaction mixture was added 0.26 g (0.0013 mole) of 1,3-dicyclohexylcarbodiimide. After complete addition, the reaction mixture was allowed to warm to room temperature and was stirred for approximately 18 hours. The reaction mixture was filtered. The filtrate was diluted with carbon tetrachloride and was washed in succession with a 1N hydrochloric acid solution, an aqueous 10% sodium hydroxide solution, water, and an aqueous saturated sodium chloride solution. The organic phase was dried over anhydrous magnesium sulfate, filtered, and the filtrate evaporated under reduced pressure to give 0.28 g of 2-chloro-3-[2,4-dichloro-5-(4-difluoromethyl)-4,5-dihydro-3-methyl-5-oxo-1H-1,2,4-triazol-1-yl)phenyl]-N-(4-chlorophenyl)propionamide as an oil.

The nmr and ir spectra were consistent with the proposed structure.

EXAMPLE 7

2-CHLORO-3-[2-CHLORO-4-FLUORO-5-(4-DIFLUOROMETHYL-4,5-DIHYDRO-3-METHYL-5-OXO-1H-1,2,4-TRIAZOL-1-YL)PHENYL]-N-(4-METHYLPHENYLSULFONYL)PROPIONAMIDE

To a stirred solution of 0.19 g (0.0012 mole) of 1,1'-carbonyldiimidazole in 3 mL of tetrahydrofuran was added a solution of 0.45 g (0.0012 mole) of 2-chloro-3-[2-chloro-4-fluoro-5-(4-difluoromethyl-4,5-dihydro-3-methyl-5-oxo-1H-1,2,4-triazol-1-yl)phenyl]propionic acid (prepared by the method of Example 3, Step A, from 1-(5-amino-4-chloro-2-fluorophenyl)-4-difluoromethyl-4,5-dihydro-3-methyl-1,2,4-triazol-5(1H)-one) in 5 mL of tetrahydrofuran.

The reaction mixture was diluted with 5 mL of tetrahydrofuran. The mixture was stirred at room temperature for 30 minutes, then was heated at reflux for 30 minutes. The reaction mixture was cooled to room temperature, and 0.20 g (0.0012 mole) of para-toluenesulfonamide was added. The mixture was stirred for approximately 10 minutes, and 0.17 g (0.0012 mole) of 1,8-diazabicyclo [5.4.0]undec-7-ene was added. The resultant mixture was stirred at room temperature for approximately 18 hours. The reaction mixture was partitioned between diethyl ether and 1N hydrochloric acid solution. The organic phase was washed in succession with water and an aqueous saturated sodium chloride solution. The washed organic phase was dried over anhydrous magnesium sulfate, filtered, and the filtrate evaporated under reduced pressure leaving a residue. This residue was purified by column chromatography on silica gel, eluting with n-heptane:ethanol:chloroform (1:1:1), to yield 0.23 g of 2-chloro-3-[2-chloro-4-fluoro-5-(4-difluoromethyl)-4,5-dihydro-3-methyl-5-oxo-1H-1,2,4-triazol-1-yl)phenyl]-N-(4-methylphenylsulfonyl)propionamide as a solid, m.p. 267-269°C.

The nmr spectrum was consistent with the proposed structure.

EXAMPLE 8

ETHYL 3-[2,-CHLORO-4-FLUORO-5-(4-DIFLUOROMETHYL-4,5-DIHYDRO-3-METHYL-5-OXO-1H-1,2,4-TRIAZOL-1-YL)PHENYL]PROPENOATE

Step A 2-(2-Chloro-4-fluoro-5-nitrophenyl)-1,3-dithiane

To a solution of 53.2 g (0.261 mole) of 2-chloro-4-fluoro-5-nitrobenzaldehyde in 800 mL of methylene chloride was added 42.2 g (0.390 mole) of 1,3-propanedithiol. Boron trifluoride etherate (6.4 mL, 0.052 mole) was added to the mixture. The resulting mixture was stirred under a dry nitrogen atmosphere at room temperature for approximately 48 hours. Additional boron trifluoride etherate and 1,3-propanedithiol were added since analysis of the reaction mixture by thin layer chromatography indicated 2-chloro-4-fluoro-5-nitrobenzaldehyde was still present. The resultant mixture was stirred for an additional five hours. The reaction mixture was diluted with 300 mL of an aqueous, 5% sodium hydroxide

solution. The organic phase was dried over anhydrous magnesium sulfate and was filtered. The filtrate was evaporated under reduced pressure leaving a solid residue. This solid was dissolved in a mixture of methylene chloride and n-heptane from which a solid was allowed to crystallize. This solid was removed by filtration, and the filtrate was evaporated under reduced pressure leaving 56.9 g of a solid. Analysis of this solid by nmr spectroscopy indicated that it consisted of 90% 2-(2-chloro-4-fluoro-5-nitrophenyl)-1,3-dithiane and 10% 1,3-propanedithiol.

Step B 2-(5-Amino-2-chloro-4-fluorophenyl)-1,3-dithiane

To a stirred mixture of 20.0 g (0.0681 mole) of 2-(2-chloro-4-fluoro-5-nitrophenyl)-1,3-dithiane in 150 mL of acetic acid was added 75 mL of tetrahydrofuran. Iron powder (15.8 g, 0.269 mole) was added portionwise. Upon complete addition, the reaction mixture was heated to about 50°C for approximately 30 minutes. The reaction mixture was cooled in an ice bath and was diluted with diethyl ether. The resultant mixture was filtered through a pad of Celite® filter aid. Water was added to the filtrate, and the organic phase was removed. An aqueous, sodium bicarbonate solution was added to the organic phase with vigorous stirring until the mixture was slightly basic. The aqueous phase was allowed to separate from the organic phase and was removed. The aqueous phase was extracted with diethyl ether, and the extracts were added to the organic phase. This organic solution was dried over anhydrous magnesium sulfate and was filtered. The filtrate was evaporated under reduced pressure to yield 13.5 g of 2-(5-amino-2-chloro-4-fluorophenyl)-1,3-dithiane as a solid, m.p. 112-115°C.

The nmr spectrum was consistent with the proposed structure.

Step C Acetaldehyde 4-chloro-2-fluoro-5-(1,3-dithian-2-yl)phenylhydrazone

To a stirred, cold (-5°C) mixture of 10.0 g (0.0379 mole) of 2-(5-amino-2-chloro-4-fluorophenyl)-1,3-dithiane in 100 mL of concentrated hydrochloric acid is added dropwise a solution of 2.55 g (0.0379 mole) of sodium nitrite in 20 mL of water. This mixture is stirred at -5°C for approximately 45 minutes. A solution of 17.1 g (0.0758 mole) of tin (II) chloride dihydrate in 30 mL of concentrated hydrochloric acid is added dropwise. This mixture is allowed to stir for one hour. A solution of 5.16 g (0.117 mole) of acetaldehyde in 200 mL of water is added slowly. The resultant mixture is stirred for one hour during which a precipitate forms. This solid is collected by filtration and is washed with water and dried to yield acetaldehyde 4-chloro-2-fluoro-5-(1,3-dithian-2-yl)-phenylhydrazone.

Step D 1-[4-Chloro-2-fluoro-5-(1,3-dithian-2-yl)phenyl]-4,5-dihydro-3-methyl-1,2,4-triazol-5(1H)-one

To a stirred mixture of 5.00 g (0.0145 mole) of acetaldehyde 4-chloro-2-fluoro-5-(1,3-dithian-2-yl)phenylhydrazone in 50 mL of acetic acid is added dropwise a solution of 1.38 g (0.017 mole) of potassium cyanate in 5 mL of water. This mixture is stirred at 15°C for approximately 1.5 hour. Additional aqueous potassium cyanate solution may be added if analysis of the reaction mixture by thin layer chromatography indicates the presence of acetaldehyde 4-chloro-2-fluoro-5-(1,3-dithian-2-yl)phenylhydrazone. While maintaining a temperature of 15°C, 30 mL of an aqueous, 5% sodium hypochlorite solution is added. This mixture is stirred at 15°C for approximately one hour. The solvents are removed by distillation under reduced pressure to leave a residue. This residue is dissolved in ethyl acetate and is washed in succession with an aqueous, saturated sodium bicarbonate solution, water, and an aqueous, saturated sodium chloride solution. The washed organic solution is dried over anhydrous magnesium sulfate and is filtered. The filtrate is evaporated under reduced pressure to yield 1-[4-chloro-2-fluoro-5-(1,3-dithian-2-yl)phenyl]-4,5-dihydro-3-methyl-1,2,4-triazol-5(1H)-one.

Step E 1-[4-Chloro-2-fluoro-5-(1,3-dithian-2-yl)phenyl]-4-difluoromethyl-4,5-dihydro-3-methyl-1,2,4-triazol-5(1H)-one

A stirred mixture of 2.5 g (0.0072 mole) of 1-[4-chloro-2-fluoro-5-(1,3-dithian-2-yl)phenyl]-4,5-dihydro-3-methyl-1,2,4-triazol-5(1H)-one and 3.0g (0.022 mole) of anhydrous potassium carbonate in 30 mL of anhydrous N,N-dimethylformamide is heated at 90°C under a dry nitrogen atmosphere. Chlorodifluoromethane gas is bubbled into the mixture until a reflux of the gas is seen in a dry ice/acetone condenser which is fitted on the reaction flask. After approximately one hour, the reaction mixture is allowed to cool and is poured into about 300 mL of cold water forming a precipitate. This solid is collected by filtration, washed with water, and is dried to yield 1-[4-chloro-2-fluoro-5-(1,3-dithian-2-yl)phenyl]-4-difluoromethyl-4,5-dihydro-3-methyl-1,2,4-triazol-5(1H)-one.

Step F 1-[4-Chloro-2-fluoro-5-formylphenyl)-4-difluoromethyl-4,5-dihydro-3-methyl-1,2,4-triazol-5(1H)-one

A mixture of 2.0 g (0.0051 mole) of 1-[4-chloro-2-fluoro-5-(1,3-dithian-2-yl)phenyl]-4-difluoromethyl-4,5-dihydro-3-methyl-1,2,4-triazol-5(1H)-one in 25 mL of acetone and 25 mL of acetonitrile is added slowly to a stirred, cold (0°C)

solution of 5.5 g (0.031 mole) of N-bromosuccinimide in 80 mL of acetonitrile and 20 mL of water. The reaction mixture is stirred at 0°C for about one hour. Approximately 15 mL of an aqueous, saturated sodium bisulfite solution is added. A mixture of 25 mL of methylene chloride and 25 mL of n-heptane is added, and the mixture is shaken in a separatory funnel. The organic phase is removed and is washed in succession with an aqueous, saturated sodium bicarbonate solution, water, and an aqueous, saturated sodium chloride solution. The washed organic phase is dried over anhydrous magnesium sulfate and is filtered. The filtrate is evaporated under reduced pressure to leave a residue. This residue is purified by column chromatography on silica gel to yield 1-(4-chloro-2-fluoro-5-formylphenyl)-4-difluoromethyl-4,5-dihydro-3-methyl-1,2,4-triazol-5(1H)-one.

Step G Ethyl 3-[2-chloro-4-fluoro-5-(4-difluoromethyl-4,5-dihydro-3-methyl-5-oxo-1H-1,2,4-triazol-1-yl)phenyl]propenoate

To a stirred solution of 1.0 g (0.0034 mole) of 1-(4-chloro-2-fluoro-5-formylphenyl)-4-difluoromethyl-4,5-dihydro-3-methyl-1,2,4-triazol-5(1H)-one in 15 mL of toluene is added 1.2 g (0.0034 mole) of (carbethoxymethylene)triphenylphosphorane. The reaction mixture is stirred at room temperature for about three hours and then is heated at reflux for about five hours. The reaction mixture is cooled and is diluted with diethyl ether. This mixture is washed in succession with water, 1N hydrochloric acid, an aqueous, saturated sodium bicarbonate solution, and an aqueous, saturated sodium chloride solution. The washed organic phase is dried over anhydrous magnesium sulfate and is filtered. The filtrate is evaporated under reduced pressure to leave a residue. This residue is purified by column chromatography on silica gel to yield ethyl 3-[2-chloro-4-fluoro-5-(4-difluoromethyl)-4,5-dihydro-3-methyl-5-oxo-1H-1,2,4-triazol-1-yl)phenyl]propenoate.

EXAMPLE 9

ETHYL 2-CHLORO-3-[-2-CHLORO-4-FLUORO-5-(4-DIFLUOROMETHYL-4,5-DIHYDRO-3-METHYL-5-OXO-1H-1,2,4-TRIAZOL-1-YL)PHENYL]PROPIONATE

In a flask were placed 10.21 g (0.102 mole) of ethyl acrylate, 0.53 g (0.0051 mole) of tertiary butyl nitrite, 0.55 g (0.0041 mole) of copper(II) chloride, and 20 mL of acetonitrile. To this rapidly stirred mixture was slowly added 1.0 g (0.0034 mole) of 1-(5-amino-4-chloro-2-fluorophenyl)-4-difluoromethyl-4,5-dihydro-3-methyl-1,2,4-triazol-5(1H)-one (prepared by the method of Example 1, Steps A through H, of U. S. 4,818,275). During this addition the reaction mixture became a dark color. The reaction mixture was stirred at ambient temperature for approximately 16 hours after which it was poured into 2N hydrochloric acid. The resulting mixture was extracted with diethyl ether, and the diethyl ether extracts were in turn washed with 2N hydrochloric acid. The extracts were dried over anhydrous magnesium sulfate and filtered. The filtrate was evaporated under reduced pressure, leaving an orange oil as a residue. This residue was passed through a column of silica gel, eluting with heptane:ethyl acetate (80:20). The product-containing fractions were combined, and the solvents were evaporated under reduced pressure, leaving 0.89 g of ethyl 2-chloro-3-[2-chloro-4-fluoro-5-(4-difluoromethyl-4,5-dihydro-3-methyl-5-oxo-1H-1,2,4-triazol-1-yl)phenyl]propionate as a thick, colorless oil. The nmr and ir spectra were consistent with the proposed structure.

TABLE 1

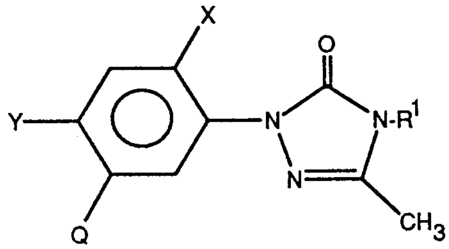

| Cmpd No. | X | Y | Q | $R^1$ |
|---|---|---|---|---|
| 1 | Cl | Cl | $CH_2CH_2CO_2CH_3$ | $CHF_2$ |
| 2 | Cl | Cl | $CH_2CH(Cl)CO_2H$ | $CHF_2$ |
| 3 | Cl | Cl | $CH_2CH(Cl)CO_2CH_3$ | $CHF_2$ |
| 4 | Cl | Cl | $CH_2CH(Cl)CO_2C_2H_5$ | $CHF_2$ |
| 5 | F | Cl | $CH_2CH(Cl)CO_2C_2H_5$ | $CHF_2$ |
| 6 | Cl | Cl | $CH_2CH(Br)CO_2C_2H_5$ | $CHF_2$ |
| 7 | Cl | Cl | $CH_2CH(Cl)CO_2CH(CH_3)_2$ | $CHF_2$ |
| 8 | Cl | Cl | $CH_2CH(Cl)CO_2CH(CH_3)CH_2CH_3$ | $CHF_2$ |
| 9 | Cl | Cl | $CH_2CH(Cl)CO_2CH_2C_6H_5$ | $CHF_2$ |
| 10 | Cl | Cl | $CH(Br)CH(Br)CO_2CH_3$ | $CHF_2$ |
| 11 | Cl | Cl | $CH(Br)CH(Br)CO_2C_2H_5$ | $CHF_2$ |
| 12 | Cl | Cl | $CH(CH_3)CH(Cl)CO_2C_2H_5$ | $CHF_2$ |
| 13 | F | Cl | $CH_2C(Cl)(CH_3)CO_2CH_3$ | $CHF_2$ |
| 14 | Cl | Cl | $CH_2CH(Cl)C(O)NH_2$ | $CHF_2$ |
| 15 | Cl | Cl | $CH_2CH(Cl)C(O)NHCH_3$ | $CHF_2$ |
| 16 | Cl | Cl | $CH_2CH(Cl)C(O)N(CH_3)_2$ | $CHF_2$ |
| 17 | Cl | Cl | $CH_2CH(Cl)C(O)NH$-cyclopropyl | $CHF_2$ |

| Cmpd No. | X | Y | Q | $R^1$ |
|---|---|---|---|---|
| 18 | Cl | Cl | $CH_2CH(Cl)C(O)NHCH_2CH{=}CH_2$ | $CHF_2$ |
| 19 | Cl | Cl | $CH_2CH(Cl)C(O)NHCH_2CN$ | $CHF_2$ |
| 20 | Cl | Cl | $CH_2CH(Cl)C(O)NHOH$ | $CHF_2$ |
| 21 | Cl | Cl | $CH_2CH(Cl)C(O)NHOCH_3$ | $CHF_2$ |
| 22 | Cl | Cl | $CH_2CH(Cl)C(O)N(CH_3)OCH_3$ | $CHF_2$ |
| 23 | Cl | Cl | $CH_2CH(Cl)C(O)NHC_6H_4$-4-Cl | $CHF_2$ |
| 24 | Cl | Cl | $CH_2CH(Cl)C(O)NHCH_2C_6H_4$-4-Cl | $CHF_2$ |
| 25 | Cl | Cl | $CH_2CH(Cl)C(O)NHSO_2CH_3$ | $CHF_2$ |
| 26 | Cl | Cl | $CH_2CH(Cl)C(O)NHSO_2C_6H_4$-4-Cl | $CHF_2$ |
| 27 | Cl | Cl | $CH_2CH(Cl)C(O)NHSO_2C_6H_4$-4-$CH_3$ | $CHF_2$ |
| 28 | F | Cl | $CH_2CH(CH_3)CO_2CH_3$ | $CHF_2$ |
| 29 | F | Cl | $CH_2CH(Cl)C(O)NH$-cyclopropyl | $CHF_2$ |
| 30 | F | Cl | $CH_2CH(Cl)C(O)NHCH_2CN$ | $CHF_2$ |
| 31 | F | Cl | $CH_2CH(Cl)C(O)N(CH_3)OCH_3$ | $CHF_2$ |
| 32 | F | Cl | $CH_2CH(Cl)C(O)NHSO_2CH_3$ | $CHF_2$ |
| 33 | F | Cl | $CH_2CH(Cl)C(O)NHSO_2CF_3$ | $CHF_2$ |
| 34 | F | Cl | $CH_2CH(Cl)C(O)NHSO_2C_6H_4$-2-Cl | $CHF_2$ |
| 35 | F | Cl | $CH_2CH(Cl)C(O)NHSO_2C_6H_4$-3-Cl | $CHF_2$ |
| 36 | F | Cl | $CH_2CH(Cl)C(O)NHSO_2C_6H_4$-4-Cl | $CHF_2$ |
| 37 | F | Cl | $CH_2CH(Cl)C(O)NHSO_2CH(CH_3)_2$ | $CHF_2$ |
| 38 | F | Cl | $CH_2CH(Cl)C(O)NHSO_2C_6H_4$-4-$CH_3$ | $CHF_2$ |
| 39 | Cl | Cl | $CH{=}CHCO_2CH_3$ (trans) | $CHF_2$ |

| Cmpd No. | X | Y | Q | $R^1$ |
|---|---|---|---|---|
| 40 | Cl | Cl | $CH{=}CHCO_2C_2H_5$ (trans) | $CHF_2$ |
| 41 | F | Cl | $CH{=}CHCO_2C_2H_5$ (trans) | $CHF_2$ |
| 42 | Cl | Cl | $CH{=}CHCO_2CH_2C_6H_5$ (trans) | $CHF_2$ |
| 43 | F | Cl | $CH{=}C(CH_3)CO_2CH_3$ (trans) | $CHF_2$ |
| 44 | Cl | Cl | $CH_2CH(Cl)CN$ | $CHF_2$ |
| 45 | F | Cl | $CH_2CH(Cl)CO_2CH_3$ | $CHF_2$ |
| 46 | F | Cl | $CH_2CH(Cl)COOH$ | $CHF_2$ |
| 47 | Cl | Cl | $CH_2CH(Cl)COCH_3$ | $CHF_2$ |
| 48 | Cl | Cl | $CH_2CH(Cl)CONHCH_2CH_2CH_3$ | $CHF_2$ |
| 49 | Cl | Cl | $CH_2CH(Cl)CONHCH_2CH_2CH_2CH_3$ | $CHF_2$ |
| 50 | Cl | Cl | $CH_2CH(Cl)CONHCH(CH_3)CH_2CH_3$ | $CHF_2$ |
| 51 | Cl | Cl | $CH_2CH(Cl)CONH$-cyclopentyl | $CHF_2$ |
| 52 | Cl | Cl | $CH{=}CHCONH$-cyclopentyl (trans) | $CHF_2$ |
| 53 | Cl | Cl | $CH{=}CHCONHCH_2CH_2CH_2CH_3$ (trans) | $CHF_2$ |
| 54 | Cl | Cl | $CH{=}CHCONHCH(CH_3)CH_2CH_3$ (trans) | $CHF_2$ |
| 55 | F | Cl | $CH{=}CHCO_2CH_3$ (cis/trans mix) | $CHF_2$ |
| 56 | F | Cl | $CH_2CH(Cl)CO_2CH(CH_3)_2$ | $CHF_2$ |
| 57 | Cl | Cl | $CH_2CH(Cl)CONHCH(CH_3)_2$ | $CHF_2$ |
| 58 | Cl | Cl | $CH{=}CHCONHCH(CH_3)_2$ (trans) | $CHF_2$ |
| 59 | Cl | Cl | $CH_2CH(Cl)CONHC_2H_5$ | $CHF_2$ |
| 60 | Cl | Cl | $CH{=}CHCONHC_2H_5$ (trans) | $CHF_2$ |
| 61 | F | Cl | $CH_2CH(Cl)CHO$ | $CHF_2$ |

| Cmpd No. | X | Y | Q | $R^1$ |
|---|---|---|---|---|
| 62 | F | Cl | $CH_2CH(Cl)CO_2Ca_{1/2}$* | $CHF_2$ |
| 63 | F | Cl | $CH_2CH(Cl)CO_2K$ | $CHF_2$ |
| 64 | F | Cl | $CH_2CH(Cl)CO_2NH(C_2H_5)_3$ | $CHF_2$ |
| 65 | Cl | Cl | $CH_2CH(Cl)CO_2CH_3$ | $CF_2CHF_2$ |
| 66 | F | Cl | $CH_2CH(Cl)CO_2CH_3$ | $CF_2CHF_2$ |
| 67 | F | Cl | $CH_2CH(Cl)CO_2C_2H_5$ | $CF_2CHF_2$ |
| 68 | F | Cl | $CH_2C(Cl)(CH_3)CO_2CH_3$ | $CF_2CHF_2$ |
| 69 | Cl | Cl | $CH_2CH(Cl)CO_2CH_2CO_2CH_3$ | $CHF_2$ |
| 70 | Cl | Cl | $CH_2CH(Br)CO_2CH_3$ | $CHF_2$ |
| 71 | F | Cl | $CH_2CH(Cl)CO_2Na$ | $CHF_2$ |
| 72 | Cl | Cl | $CH_2CH(Cl)C(O)NHSO_2CH_2C_6H_5$ | $CHF_2$ |
| 73 | Cl | Cl | $CH{=}CHCO_2H$ (trans) | $CHF_2$ |
| 74 | Cl | Cl | $CH{=}CHC(O)NH_2$ (trans) | $CHF_2$ |

* Calcium salt containing 2 equivalents of the acid moiety.

TABLE 2
Measured Melting Points

| Cmpd No. | m.p. (°C) | Cmpd No. | m.p. (°C) |
|---|---|---|---|
| 1 | 70-73 | 30 | 158-160 |
| 2 | 138-141 | 31 | 125-127 |
| 3 | oil | 34 | foam* |
| 4 | oil | 35 | oil |
| 5 | oil | 36 | foam* |
| 6 | oil | 37 | foam* |
| 7 | oil | 38 | 267-269 dec |
| 8 | oil | 39 | 148-151 |
| 9 | oil | 40 | 140-141 |
| 10 | solid | 41 | 119-122 |
| 11 | 58-60 | 42 | 101-105 |
| 12 | oil | 43 | 96-98 |
| 13 | oil | 44 | oil |
| 14 | 164-167 | 45 | oil |
| 15 | foam* | 46 | >280 |
| 16 | oil | 47 | oil |
| 17 | 139-143 | 48 | oil |
| 18 | oil | 49 | oil |
| 19 | 155-157 | 50 | oil |
| 20 | foam* | 51 | 153.5-155 |
| 21 | foam* | 52 | 162-164 |
| 22 | oil | 53 | 74-76 |
| 23 | oil | 54 | 85-88 |
| 24 | oil | 55 | oily solid |
| 25 | foam* | 57 | foam* |
| 26 | foam* | 58 | 188-191 |
| 27 | foam* | 59 | 141-142 |
| 28 | oil | 60 | 81-83 |
| 29 | foam* | 62 | >280 |

*Materials designated as "foam" were recovered as amorphous solids with no definite melting point.

Table 2 (Continued)

| Cmpd No. | m.p. (°C) |
|---|---|
| 63 | 195 dec |
| 64 | oil |
| 65 | oil |
| 66 | oil |
| 67 | oil |
| 68 | oil |
| 69 | oil |
| 70 | oil |
| 71 | 173-174 |
| 72 | oil |
| 73 | 210-212 |
| 74 | 180-184 |

HERBICIDAL FORMULATIONS

For herbicidal application, the active compounds are formulated into herbicidal compositions by admixture in herbicidally effective amounts with adjuvants and carriers normally employed in the art for facilitating the dispersion of active ingredients for the particular utility desired, recognizing the fact that the formulation and mode of application of a toxicant may affect the activity of the material in a given application. Thus, for agricultural use the present herbicidal compounds may be formulated as granules of relatively large particle size, as water-soluble or water-dispersible granules, as powdery dusts, as wettable powders, as emulsifiable concentrates, as solutions, or as any of several other known types of formulations, depending on the desired mode of application.

These herbicidal compositions may be applied either as water-diluted sprays, or dusts, or granules to the areas in which suppression of vegetation is desired. These formulations may contain as little as 0.1%, 0.2% or 0.5% to as much as 95% or more by weight of active ingredient.

Dusts are free flowing admixtures of the active ingredient with finely divided solids such as talc, natural clays, kieselguhr, flours such as walnut shell and cottonseed fours, and other organic and inorganic solids which act as dispersants and carriers for the toxicant; these finely divided solids have an average particle size of less than about 50 microns. A typical dust formulation useful herein is one containing 1.0 part or less of the herbicidal compound and 99.0 parts of talc.

Wettable powders, also useful formulations for both pre- and postemergence herbicides, are in the form of finely divided particles which disperse readily in water or other dispersant. The wettable powder is ultimately applied to the soil either as a dry dust or as an emulsion in water or other liquid. Typical carriers for wettable powders include Fuller's earth, kaolin clays, silicas, and other highly absorbent, readily wet inorganic diluents. Wettable powders normally are prepared to contain about 5-80% of active ingredient, depending on the absorbency of the carrier, and usually also contain a small amount of a wetting, dispersing or emulsifying agent to facilitate dispersion. For example, a useful wettable powder formulation contains 80.8 parts of the herbicidal compound 17.9 parts of Palmetto clay, and 1.0 part of sodium lignosulfonate and 0.3 part of sulfonated aliphatic polyester as wetting agents. Other wettable powder formulations are:

| Component: | % by Wt. |
|---|---|
| Active ingredient | 40.00 |
| Sodium lignosulfonate | 20.00 |
| Attapulgite clay | 40.00 |
| Total | 100.00 |

| Component: | % by Wt. |
|---|---|
| Active ingredient | 90.00 |
| Dioctyl sodium sulfosuccinate | 0.10 |
| Synthetic fine silica | 9.90 |
| Total | 100.00 |

| Component: | % by Wt. |
|---|---|
| Active ingredient | 20.00 |
| Sodium alkylnaphthalenesulfonate | 4.00 |
| Sodium lignosulfonate | 4.00 |
| Low viscosity methyl cellulose | 3.00 |
| Attapulgite clay | 69.00 |
| Total | 100.00 |

| Component: | % by Wt. |
|---|---|
| Active ingredient | 25.00 |
| Base: | 75.00 |
| 96% hydrated aluminum magnesium silicate | |
| 2% powdered sodium lignosulfonate | |
| 2% powdered anionic sodium alkylnaphthalenesulfonate | |
| Total | 100.00 |

Frequently, additional wetting agent and/or oil will be added to the tank-mix for postemergence application to facilitate dispersion on the foliage and absorption by the-plant.

Other useful formulations for herbicidal applications are emulsifiable concentrates (ECs) which are homogeneous liquid or paste compositions dispersible in water or other dispersant, and may consist entirely of the herbicidal compound and a liquid or solid emulsifying agent, or may also contain a liquid carrier, such as xylene, heavy aromatic naphthas, isophorone, or other non-volatile organic solvent. For herbicidal application these concentrates are dispersed in water or other liquid carrier, and normally applied as a spray to the area to be treated. The percentage by weight of the essential active ingredient may vary according to the manner in which the composition is to be applied, but in general comprises 0.5 to 95% of active ingredient by weight of the herbicidal composition.

The following are specific examples of emulsifiable concentrate formulations:

| Component: | % by Wt. |
|---|---|
| Active ingredient | 53.01 |
| Blend of alkylnaphthalenesulfonate and polyoxyethylene ethers | 6.00 |
| Epoxidized soybean oil | 1.00 |
| Xylene | 39.99 |
| Total | 100.00 |

| Component: | % by Wt. |
|---|---|
| Active ingredient | 10.00 |
| Blend of alkylnaphthalenesulfonate and polyoxyethylene ethers | 4.00 |
| Xylene | 86.00 |
| Total | 100.00 |

Flowable formulations are similar to ECs except that the active ingredient is suspended in a liquid carrier, generally water. Flowables, like ECs, may include a small amount of a surfactant, and contain active ingredient in the range of 0.5 to 95%, frequently from 10 to 50%, by weight of the composition. For application, flowables may be diluted in water or other liquid vehicle, and are normally applied as a spray to the area to be treated.

The following are specific examples of flowable formulations:

| Component: | % by Wt. |
|---|---|
| Active ingredient | 46.00 |
| Colloidal magnesium aluminum silicate | 0.40 |
| Sodium alkylnaphthalenesulfonate | 2.00 |
| Paraformaldehyde | 0.10 |
| Water | 40.70 |
| Propylene glycol | 7.50 |
| Acetylenic alcohols | 2.50 |
| Xanthan gum | 0.80 |

(continued)

| Component: | % by Wt. |
|---|---|
| Total | 100.00 |

| Component: | % by Wt. |
|---|---|
| Active ingredient | 45.00 |
| Water | 48.50 |
| Purified smectite clay | 2.00 |
| Xanthan gum | 0.50 |
| Sodium alkylnaphthalenesulfonate | 1.00 |
| Acetylenic alcohols | 3.00 |
| Total | 100.00 |

Typical wetting, dispersing or emulsifying agents used in agricultural formulations include, but are not limited to, the alkyl and alkylaryl sulfonates and sulfates and their sodium salts; alkylaryl polyether alcohols; sulfated higher alcohols; polyethylene oxides; sulfonated animal and vegetable oils; sulfonated petroleum oils; fatty acid esters of polyhydric alcohols and the ethylene oxide addition products of such esters; and the addition product of long-chain mercaptans and ethylene oxide. Many other types of useful surface-active agents are available in commerce. The surface-active agent, when used, normally comprises from 1 to 15% by weight of the composition.

Other useful formulations include simple solutions or suspensions of the active ingredient in a relatively non-volatile solvent such as water, corn oil, kerosene, propylene glycol, or other suitable solvents. The following illustrate specific suspensions:

| Oil Suspension: | % by Wt. |
|---|---|
| Active ingredient | 25.00 |
| Polyoxyethylene sorbitol hexaoleate | 5.00 |
| Highly aliphatic hydrocarbon oil | 70.00 |
| Total | 100.00 |

| Aqueous Suspension: | % by Wt. |
|---|---|
| Active ingredient | 40.00 |
| Polyacrylic acid thickener | 0.30 |
| Dodecylphenol polyethylene glycol ether | 0.50 |
| Disodium phosphate | 1.00 |
| Monosodium phosphate | 0.50 |
| Polyvinyl alcohol | 1.00 |

(continued)

| Aqueous Suspension: | % by Wt. |
|---|---|
| Water | 56.70 |
| Total | 100.00 |

Other useful formulations for herbicidal applications include simple solutions of the active ingredient in a solvent in which it is completely soluble at the desired concentration, such as acetone, alkylated naphthalenes, xylene, or other organic solvents. Granular formulations, wherein the toxicant is carried on relatively coarse particles, are of particular utility for aerial distribution or for penetration of cover crop canopy. Pressurized sprays, typically aerosols wherein the active ingredient is dispersed in finely divided form as a result of vaporization of a low boiling dispersant solvent carrier, such as the Freon fluorinated hydrocarbons, may also be used. Water-soluble or water-dispersible granules are also useful formulations for herbicidal application of the present compounds. Such granular formulations are free-flowing, non-dusty, and readily water-soluble or water-miscible. The soluble or dispersible granular formulations described in U.S. patent No. 3,920,442 are useful herein with the present herbicidal compounds. In use by the farmer on the field, the granular formulations, emulsifiable concentrates, flowable concentrates, solutions, etc., may be diluted with water to give a concentration of active ingredient in the range of say 0.1% or 0.2% to 1.5% or 2%.

The active herbicidal compounds of this invention may be formulated and/or applied with insecticides, fungicides, nematicides, plant growth regulators, fertilizers, or other agricultural chemicals. as In applying an active compound of this invention, whether formulated alone or with other agricultural chemicals, an effective amount and concentration of the active compound is of course employed; for example, with Compound 5 (Table 1) applied postemergently, amounts as low as 7 g/ha or less, e.g. 7-125 g/ha, may be employed with little or no injury to crops such as maize. For field use, where there are losses of herbicide, higher application rates (e.g. four times the rates mentioned above) may be employed.

The triazolinones of this invention may be used in combination with other herbicides, for example they may be mixed with, say, an equal or larger amount of a known herbicide such as aryloxyalkanoic acid herbicides such as (2,4-dichlorophenoxy)acetic acid (2,4-D), (4-chloro-2-methylphenoxy)acetic acid (MCPA), (+/-)-2-(4-chloro-2-methylphenoxy)propanoic acid (MCPP); urea herbicides, such as N,N-dimethyl-N'-[4-(1-methylethyl)phenyl]urea (isoproturon); imidazolinone herbicides, such as 2-[4,5-dihydro-4-methyl-4-(1-methylethyl)-5-oxo-1H-imidazol-2-yl]-3-pyridinecarboxylic acid (imazapyr), a reaction product comprising (+/-)-2-[4,5-dihydro-4-methyl-4-(1-methylethyl)-5-oxo-1H-imidazol-2-yl]-4-methylbenzoic acid and (+/-)-2-[4,5-dihydro-4-methyl-4-(1-methylethyl)-5-oxo-1H-imidazol-2-yl]-5-methylbenzoic acid (imazamethabenz), (+/-)-2-[4,5-dihydro-4-methyl-4-(1-methylethyl)-5-oxo-1H-imidazol-2-yl]-5-ethyl-3-pyridinecarboxylic acid (imazethapyr),and (+/-)-2-[4,5-dihydro-4-methyl-4-(1-methylethyl)-5-oxo-1H-imidazol-2-yl]-3-quinolinecarboxylic acid (imazaquin); diphenyl ether herbicides, such as 5-[2-chloro-4-(trifluoromethyl)phenoxy]-2-nitrobenzoic acid (acifluorfen), methyl 5-(2,4-dichlorophenoxy)-2-nitrobenzoate (bifenox), and 5-[2-chloro-4-(trifluoromethyl)phenoxy]-N-(methylsulfonyl)-2-nitrobenzamide (fomasafen); hydroxybenzonitrile herbicides, such as 4-hydroxy-3,5-diiodobenzonitrile (ioxynil), and 3,5-dibromo-4-hydroxybenzonitrile (bromoxynil); sulfonylurea herbicides, such as 2-[[[[(4-chloro-6-methoxy-2-pyrimidinyl)amino]carbonyl]amino]sulfonyl]benzoic acid (chlorimuron), 2-chloro-N-[[(4-methoxy-6-methyl-1,3,5-triazin-2-yl)amino]carbonyl]benzenesulfonamide (chlorsulfuron), 2-[[[[[(4,6-dimethoxy-2-pyrimidinyl)amino]carbonyl]amino]sulfonyl]methyl]benzoic acid (bensulfuron), 2-[[[[(4,6-dimethoxy-2-pyrimidinyl)amino]carbonyl]amino]sulfonyl]-1-methyl-1H-pyrazol-4-carboxylic acid (pyrazosulfuron), 3-[[[[(4-methoxy-6-methyl-1,3,5-triazin-2-yl)amino]carbonyl]amino]sulfonyl]-2-thiophene-carboxylic acid (thifensulfuron), and 2-(2-chloro-ethoxy)-N-[[(4-methoxy-6-methyl-1,3,5-triazin-2-yl)amino]carbonyl]benzenesulfonamide (triasulfuron); 2-(4-aryloxyphenoxy)alkanoic acid herbicides, such as (+/-)-2-[4-[(6-chloro-2-benzoxazolyl)oxy]phenoxy]propanoic acid (fenoxaprop), (+/-)-2-[4-[[5-(trifluoromethyl)-2-pyridinyl]oxy]phenoxy]propanoic acid (fluazifop), (+/-)-2-[4-(6-chloro-2-quinoxalinyl)oxy]phenoxy]propanoic acid (quizalofop), and (+/-)-2-[-(2,4-dichlorophenoxy)phenoxy]propanoic acid (diclofop); benzothiadiazinone herbicides, such as 3-(1-methylethyl)-1H-2,1,3-benzothiadiazin-4(3H)-one 2,2-dioxide (bentazone); 2-chloroacetanilide herbicides, such as N-(butoxymethyl)-2-chloro-2',6'-diethylacetanilide (butachlor); arenecarboxylic acid herbicides, such as 3,6-dichloro-2-methoxybenzoic acid (dicamba); and pyridyloxyacetic acid herbicides, such as [(4-amino-3,5-dichloro-6-fluoro-2-pyridinyl)oxy]acetic acid (fluroxypyr).

<u>HERBICIDAL ACTIVITY</u>

The weed species is galium (*Galium aparine*), while the cereal crops tested for plant injury were barley (*Hordeum vulgare*) and wheat (*Triticum aestivum*).

Standard 4 inch green plastic pots, whose bottom drainage holes were covered with filter paper to prevent soil leakage, were filled to the top with pasteurized, sieved topsoil which was tamped to provide a level planting surface.

Postemergence

The desired test species seeds are spread evenly over the entire surface area for each pot. For post-emergent testing wheat and barley are planted 14 days prior to application; for galium, 21 days prior to spraying with the herbicidal composition. The plants are then grown in Growth Chambers set at 14 hour day length, 20°C day, and 15°C night temperatures.

Test Solutions and Application

A stock solution of Compound 5 was prepared by dissolving 0.012 g of the compound in 20 mL of water/acetone (50/50) containing 0.5 % v/v sorbitan monolaurate. For an application rate of 100 g/ha of herbicide, a 10 mL portion of the stock solution was diluted with water/acetone (50/50) to 60 mL. The volumes of stock solution and diluent used to prepare solutions for lower application rates are shown in the following table:

| Application Rate (g/ha) | Volume of Stock Solution (mL) | Volume of Acetone/Water (mL) | Total Volume of Spray Solution (mL) |
|---|---|---|---|
| 100 | 10 | 50 | 60 |
| 30 | 3 | 57 | 60 |
| 10 | 1 | 59 | 60 |
| 3 | 0.3 | 60 | 60.3 |
| 1 | 0.1 | 60 | 60.1 |

The 4 inch pots containing the plants were placed on a conveyor belt which passed under a spray nozzle. The spray nozzle was set at a height 27 cm above the foliage of the wheat or barley. After the spray of the herbicidal solution commenced and had stabilized, the flats were passed under the nozzle at a speed calculated to apply the spray to the plants at a coverage equivalent to 1000 l/ha. In this manner the application rates shown above were applied to the plants. After being sprayed, the plants were returned to the growth chamber which was operated at the same conditions as those in which the plants had been grown. The plants were watered as needed for a period of 21 days. Seven days after treatment the first evaluation of crop injury was made and crop injury and weed control were both assessed at 21 days after treatment.

Phytotoxicity Data

Phytotoxicity data are taken as percent control. Percent control is determined by a method similar to the 0 to 100 rating system disclosed in "Research Methods in Weed Science," 2nd ed., B. Truelove, Ed.; Southern Weed Science Society; Auburn University, Auburn, Alabama, 1977. The rating system is as follows:

| Herbicide Rating System | | | |
|---|---|---|---|
| Rating Percent Control | Description of Main Categories | Crop Description | Weed Description |
| 0 | No effect | No crop reduction or injury | No weed control |
| 10 | | Slight dis | Very poor weed coloration control or stunting |
| 20 | Slight | Some diseffect | Poor weed coloration, control stunting or stand loss |
| 30 | | Crop injury more pronounced but not lasting | Poor to deficient weed control |

(continued)

| Herbicide Rating System | | | |
|---|---|---|---|
| Rating Percent Control | Description of Main Categories | Crop Description | Weed Description |
| 40 | | Moderate injury, | Deficient weed crop usually control recovers |
| 50 | Moderate effect | Crop injury more lasting, recovery doubtful | Deficient to moderate weed control |
| 60 | | Lasting crop injury, no recovery | Moderate weed control |
| 70 | | Heavy injury and stand loss | Control somewhat less than satisfactory |
| 80 | Severe | Crop nearly destroyed, a few survivors | Satisfactory to good weed control |
| 90 | | Only occasional live plants left | Very good to excellent control |
| 100 | Complete effect | Complete crop destruction | Complete weed destruction |

<u>Test Results</u>

In the following table, the abbreviation "g ai/ha" means grams of active ingredient/hectare; and "DAT" means days after treatment.

Herbicidal data for the percent control of galium in growth chambers by a preferred compound, namely Compound 5 of Table 1, at application rates of from 1-100 g ai/ha, is given in Table 3, as compared with Compound 5's effect against wheat and barley. From these data it will be seen that at the low race of 30 g ai/ha, Compound 5 can control 92% of galium's growth after 21 days. While there is some damage to barley at these rates, these effects diminish substantially after 21 days, while the lower effects against wheat remain constantly low at these same rates and time periods.

Table 3
Percent Control of *Galium aparine*, and Damages to Wheat and Barley, in Growth Chambers

| COMPOUND | Rate | GALAP(1) 21 DAT | HORVU(1) 7 DAT | HORVU(1) 21 DAT | TRIAE(1) 7 DAT | TRIAE(1) 21 DAT |
|---|---|---|---|---|---|---|
| Compound 5 | (g ai/ha) | | | | | |
| of Table 1 | 1 | 23 | 18 | 6 | 4 | 3 |
| | 3 | 40(2) | 24 | 9 | 6 | 8 |
| | 10 | 70 | 34 | 8 | 14 | 15 |
| | 30 | 92 | 43 | 8 | 18 | 19 |
| | 100 | 95 | 58 | 15 | 47 | 21 |

FOOTNOTES

(1)

| Bayer Code | Common Name | Genus Species |
|---|---|---|
| HORVU | Barley | *Hordeum vulgare* |
| TRIAE | Wheat | *Triticum aestivum* |
| GALAP | Catchweed bedstraw | *Galium aparine* |

(2) Average of four tests; all others are the average of six tests.

Data on *Galium aparine* control and crop injury to winter wheat are reported in Tables 4 and 5, respectively. These field trials were conducted at three sites in England. In addition to Compound 5 at six rates, plots were treated with fluroxypyr, a commercial herbicide sold for control of *Galium aparine* under the trademark STARANE® by DowElanco, Indianapolis, Indiana, at two rates. Plots that were treated measured 2 meters by 12 meters. The chemicals were applied using an Azo precision sprayer fitted with 110-02 flat fan nozzles. These treatments were sprayed using a water volume of 200 liters/ha at a pressure of 2.4 bars.

In Tables 4 and 5 the winter wheat was evaluated for leaf burn 7,15, and 30 days after treatment. Control of Galium *aparine* was also evaluated 15, 30, and 60 days after treatment. The data for leaf burn are reported in Table 5 with 0 % being no leaf burn and 100 % being total leaf burn. Crop stunting and thinning were also evaluated at 15, 30, and 60 days after treatment, but neither of these effects was observed above negligible levels. Data on the control of *Galium aparine* is reported in Table 4, using a rating system where 0 % indicates no control and 100 % indicates complete control.

The fluroxypyr of Tables 4 and 5 was obtained as a 200 g ai/liter emulsifiable concentrate that is commercially available. Compound 5 was formulated as a 240 g ai/liter concentrate having the following ingredients:

| Component | Percent by Weight |
|---|---|
| Compound 5 | 24.7 |
| Emulsifier A[a)] | 2.7 |
| Emulsifier B[b)] | 5.3 |
| Aromatic solvent[c)] | 67.3 |
| Total | 100.0 |

FOOTNOTES

a) Emulsifier A is a blend of calcium dodecylbenzenesulfonate and a nonyl phenol alkylated with a block co-polymer of ethylene oxide and propylene oxide having an HLB of 10.3, manufactured by OMNICHEM s.a., Louvain-la-Neuve, Belgium.

b) Emulsifier B is a blend of calcium dodecylbenzenesulfonate and a nonyl phenol alkylated with a block co-polymer of ethylene oxide and propylene oxide having an HLB of 12.3, manufactured by OMNICHEM s.a., Louvain-la-Neuve, Belgium.

c) Aromatic solvent having a flash point of 102°C sold by EXXON Chemical International, Inc., Kraainem, Belgium.

It will be seen that the preferred application rate is 15-60 g ai/ha, and more particularly 30-50 g a/ha, to optimize the herbicidal effects without deleterious effects on the cereal crops as well.

Table 4

| Control of *Galium aparine* in Field Trials | | | | |
|---|---|---|---|---|
| Treatment | Rate (g ai/ha) | Mean Percent Control (3 sites) | | |
| | | 15 DAT | 30 DAT | 60 DAT |
| Untreated | - | 0.0 | 0.0 | 0.0 |
| Compound 5 | 15 | 91.1 | 93.0 | 88.4 |
| Compound 5 | 20 | 96.0 | 95.9 | 95.3 |
| Compound 5 | 25 | 97.4 | 98.7 | 96.1 |
| Compound 5 | 30 | 97.9 | 99.1 | 96.0 |
| Compound 5 | 40 | 98.9 | 99.7 | 98.4 |
| Compound 5 | 50 | 97.9 | 99.2 | 98.6 |
| fluroxypyr | 150 | 74.6 | 86.3 | 91.3 |
| fluroxypyr | 200 | 75.0 | 86.0 | 93.7 |

Table 5

| Damage to Winter Wheat in Field Trials | | | | |
|---|---|---|---|---|
| Treatment | Rate (g ai/ha) | Mean Percent Leaf Burn (3 sites) | | |
| | | 7 DAT | 15 DAT | 30 DAT |
| Untreated | - | 0.0 | 0.0 | 0.0 |
| Compound 5 | 15 | 1.2 | 0.7 | 0.2 |
| Compound 5 | 20 | 1.7 | 1.7 | 0.3 |
| Compound 5 | 25 | 2.7 | 4.0 | 1.2 |
| Compound 5 | 30 | 3.4 | 5.0 | 1.3 |
| Compound 5 | 40 | 3.9 | 7.7 | 2.2 |
| Compound 5 | 50 | 6.2 | 8.0 | 2.4 |
| fluroxypyr | 150 | 0.0 | 0.0 | 0.0 |
| fluroxypyr | 200 | 0.0 | 0.0 | 0.0 |

## Claims

1. The use of a triazoline having the formula

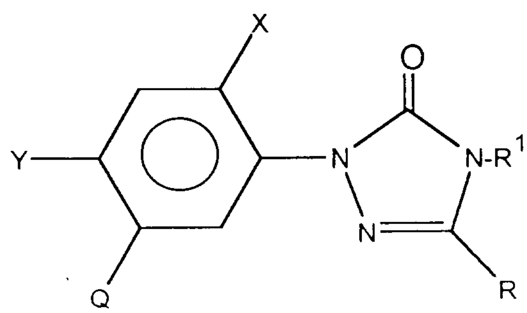

wherein

R is halogen, or lower alkyl;
$R^1$ is haloalkyl;
X is hydrogen, halogen, alkyl, haloalkyl, alkoxy, or nitro;
Y is hydrogen, halogen, alkyl, alkoxy, haloalkyl, halo lower alkylsulfinyl, or halo lower alkoxy;
Q is $-CH(R^2)C(R^3)(R^4)Q^1$;
$R^2$ is H or halogen;
$R^3$ is halogen;
$R^4$ is H or lower alkyl;
$Q^1$ is COOH, COOZ, $COOR^5$, $CON(R^6)(R^7)$, CN, CHO or $C(O)R^5$;
Z is a salt-forming group;
$R^5$ is alkyl, alkoxycarbonylalkyl, cycloalkyl, aryl, haloaryl, haloalkylaryl, or aralkyl, preferably benzyl;
each of $R^6$ and $R^7$ is, independently, hydrogen or a radical which is alkyl, cycloalkyl, alkenyl, alkynyl, alkoxy, phenyl, benzyl or $SO_2R^6$ or is one of said radicals substituted by halogen, alkyl or cyano for controlling the weed *Galium aparine* which comprises applying a herbicidally effective amount of the triazoline to the locus where the control is desired

**2.** A use according to claim 1 characterized in that the compound is having the formula

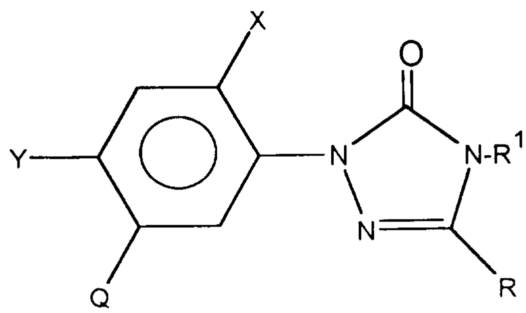

wherein

R is lower alkyl;
$R^1$ is haloalkyl;
X and Y are independently halogen; and

$$Q \text{ is } CH_3CH_2O-\overset{O}{\overset{||}{C}}-\overset{Cl}{\overset{|}{C}}H-CH_2-.$$

**3.** A use according to claim 2 characterized in that the triazoline is ethyl 2-chloro-3-[2-chloro-4-fluoro-5-(4-difluoromethyl-4,5-dihydro-3-methyl-5-oxo-1H-1,2,4-triazol-1-yl)phenyl]propionate.

**4.** A use according to any of claims 1 to 3 characterized in that locus where the triazoline is applied is in cereal crops.

**5.** A use according to claim 4 characterized in that the cereal crop is wheat, barley, oats, rice or rye.

## Patentansprüche

**1.** Verwendung eines Triazolins mit der Formel

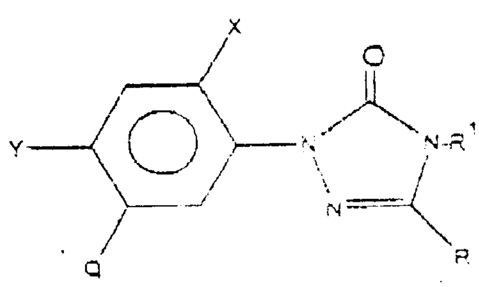

worin

R Halogen oder niederes Alkyl bedeutet;

$R^1$ Halogenalkyl bedeutet;

X Wasserstoff, Halogen, Alkyl,Halogenalkyl, Alkoxy oder Nitro bedeutet;

Y Wasserstoff, Halogen, Alkyl, Alkoxy, Halogenalkyl, niederes Halogenalkylsulfinyl oder niederes Halogenalkoxy bedeutet;
Q $-CH(R^2)C(R^3)(R^4)Q'$ bedeutet;

$R^2$ H oder Halogen bedeutet;

$R^3$ Halogen bedeutet;

$R^4$ H oder niederes Alkyl bedeutet;

Q' COOH, COOZ, $COOR^5$; $CON(R^6)(R^7)$, CN, CHO oder $C(O)R^5$ bedeutet;

Z eine salzbildende Gruppe bedeutet;

$R^5$ Alkyl, Alkoxycarbonylalkyl, Cycloalkyl, Aryl, Halogenaryl, Halogenalkylaryl oder Aralkyl, vorzugsweise Benzyl bedeutet;

$R^6$ und $R^7$ jeweils unabhängig voneinander Wasserstoff oder einen Rest, bei dem es sich um Alkyl, Cycloalkyl, Alkenyl, Alkinyl, Alkoxy, Phenyl, Benzyl oder $SO_2R^6$ handelt, bedeutet, oder einen dieser Reste, substituiert durch Halogen, Alkyl oder Cyano bedeutet,

zum Bekämpfen des Unkrauts Galium aparine, welche das Auftragen einer zur Unkrautbekämpfung wirksamen Menge des Triazolins an dem Ort, wo die Bekämpfung stattfinden soll, umfaßt.

2. Verwendung nach Anspruch 1, **dadurch gekennzeichnet,** daß die Verbindung die Formel

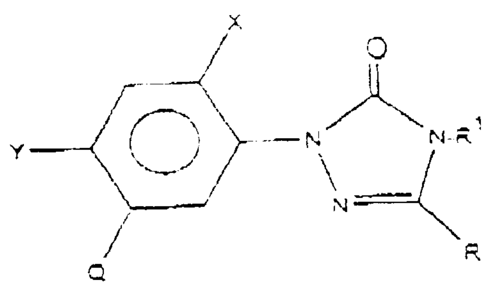

aufweist,
worin

R niederes Alkyl bedeutet;

$R^1$ Halogenalkyl bedeutet;

X und Y unabhängig voneinander Halogen bedeuten; und

Q 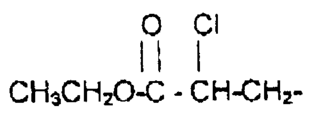

bedeutet.

3. Verwendung nach Anspruch 2, **dadurch gekennzeichnet,** daß das Triazolin Ethyl-2-chlor-3-[2-chlor-4-fluor-5-(4-difluormethyl-4,5-dihydro-3-methyl-5-oxo-1H-1,2,4-triazol-1-yl)phenyl]propionat ist.

4. Verwendung nach einem der Ansprüche 1 bis 3, **dadurch gekennzeichnet,** daß es sie bei dem Ort, wo das Triazolin aufgetragen wird, um einen Getreidepflanzenanbau handelt.

5. Verwendung nach Anspruch 4, **dadurch gekennzeichnet,** daß die Getreidepflanze Weizen, Gerste, Hafer, Reis oder Roggen ist.

**Revendications**

1. Utilisation d'une triazoline ayant la formule :

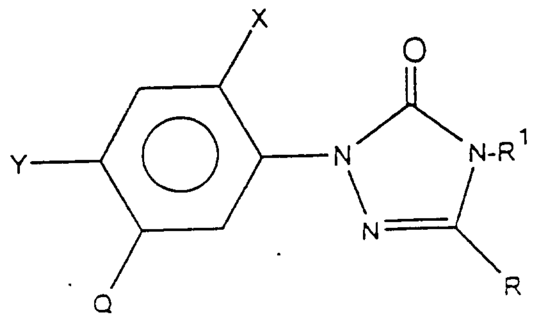

dans laquelle :

R est un halogène ou un alkyle inférieur;
$R^1$ est un haloalkyle;
X est de l'hydrogéne, un halogène, un alkyle, un haloalkyle, un alcoxy ou du nitro;
Y est de l'hydrogène, un halogène, un alkyle, un alcoxy, un haloalkyle, un haloalkylsulfinyle inférieur ou un haloalcoxy inférieur;
Q est $-CH(R^2)C(R^3)(R^4)Q'$;
$R^2$ est H ou un halogène;
$R^3$ est un halogéne;
$R^4$ est H ou un alkyle inférieur;
Q' est COOH, COOZ, $COOR^5$, $CON(R^6)(R^7)$, CN, CHO ou $C(O)R^5$;
Z est un groupe de formation de sel;
$R^5$ est un alkyle, alcoxycarbonylalkyle, cycloalkyle, aryle, haloaryle, haloalkylaryle ou aralkyle, avantageusement du benzyle;

chacun des $R^6$ et $R^7$ est, indépendamment, de l'hydrogène ou un radical qui est un alkyle, cycloalkyle, alcényle, alcynyle, alcoxy, phényle, benzyle ou $SO_2R^6$ ou est l'un de ces radicaux substitués par halogène, alkyle ou cyano pour lutter contre la mauvaise herbe *Galium aparine*, qui comprend l'application d'une quantité efficace du point de vue herbicide de la triazoline au lieu où la lutte est désirable.

2. Utilisation suivant la revendication 1, caractérisée en ce que ledit composé a la formule :

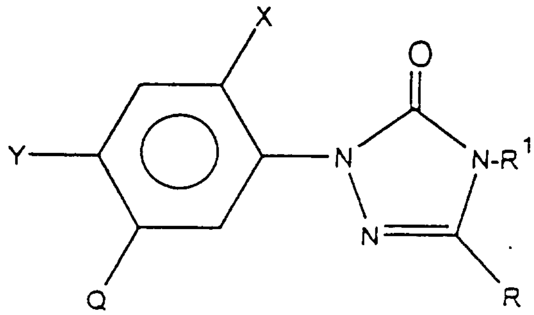

dans laquelle :

R est un alkyle inférieur;
$R^1$ est un haloalkyle;
X et Y sont indépendamment un halogène; et

Q est 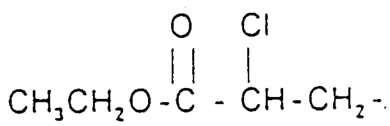

3. Utilisation suivant la revendication 2, caractérisée en ce que la triazoline est le 2-chloro-3-[2-chloro-4-fluoro-5-(4-difluorométhyl-4,5-dihydro-3-méthyl-5-oxo-1H-1,2,4-triazol-1-yl)phényl]propionate d'éthyle.

4. Utilisation suivant l'une quelconque des revendications 1 à 3, caractérisée en ce que le lieu où la triazoline est appliquée consiste en des récoltes de céréales.

5. Utilisation suivant la revendication 4, caractérisée en ce que la récolte de céréale est du blé, de l'orge, de l'avoine, du riz ou du seigle.